# EUROPEAN PATENT APPLICATION

(11) **EP 4 538 929 A1**
(43) Date of publication of application: **16.04.2025**
(21) Application number: 23820045.5
(22) Date of filing: 01.06.2023
(51) Int. Cl.: G06K 19/077

(54) **METAL CARD INCLUDING INSERT COIL AND METHOD FOR MANUFACTURING SAME**

(30) Priority: 10.06.2022 KR 20220071066
(71) Applicant: Kona M Co., Ltd., Chungcheongbuk-do 27819 (KR)
(72) Inventor: JEONG, Young Hoon, Seosan-si Chungcheongnam-do 31987 (KR); CHOI, Joung Hyun, Jincheon-gun Chungcheongbuk-do 27849 (KR); NAM, Ki Sung, Jincheon-gun Chungcheongbuk-do 27819 (KR)
(74) Representative: Viering, Jentschura & Partner mbB Patent- und Rechtsanwälte
(86) International application number: PCT/KR2023/007510
(87) International publication number: WO 2023/239109

(57) **Abstract**

A metal card according to an embodiment of the present disclosure may include an antenna layer; a wireless IC chip with a built-in chip coil for wireless communication with the antenna layer; and an insert coil structure supporting the wireless IC chip, wherein the insert coil structure includes an insert coil inserted into an upper portion of a support body adjacent to the chip coil, and formed with a path to transmit a wireless signal of the chip coil in a wired manner to an antenna coil of the antenna layer.

## Description

### BACKGROUND OF THE INVENTION

### Field of the Invention

The present disclosure relates to a metal card and a method of manufacturing the same. More specifically, the present disclosure is a metal card including an insert coil and a method of manufacturing the same.

### Background of the Related Art

In general, credit cards may be used as a substitute for cash, and in recent years, smart cards with built-in IC chips that can store a large amount of information have been developed, and are being actively used not only for payment but also for various membership cards.

In this smart card market, special cards using various materials are being developed. In particular, a differentiated metallic credit card has been developed for VIP clients, and the metal card has been provided to special customers as a high-quality credit card with a metallic sheen.

However, conventional metal cards often had difficulties with an operation of an antenna during contactless communication with a reader due to the nature of the metal, which often had limitations on RF functions and ATM use.

More specifically, conventional metal cards suffer from interference between a wireless antenna coil of a wireless IC chip and each metal due to the nature of the metal, which causes antenna communication failure and reduces the data transmission and reception efficiency of the antenna.

Accordingly, in order to prevent the phenomenon of the transmission and reception efficiency of the antenna of the metal card being reduced, a method has been proposed in which a shielding layer or the like is disposed between each metal, and furthermore, an intermediate coil such as a wireless booster coil is provided to increase the transmission and reception efficiency of the antenna so as to interwork with the wireless antenna coil of the wireless IC chip.

In the metal card proposed so far, which is provided with a wireless booster coil in this manner, the wireless booster coil and the wireless antenna coil of the IC chip are configured to be spaced apart from each other by a predetermined distance inside the metal card, and are configured to be inductively connected to each other with the antenna layer. However, there is a problem in that it is not easy to adjust a distance between the wireless booster coil and the wireless antenna coil of the IC chip during manufacturing, and communication between the wireless booster coil and the IC chip is not efficiently carried out due to the distance therebetween, making it difficult for the metal card to operate.

Accordingly, even when a wireless booster coil is utilized, with current technology, contactless communication using a metal card still has problems such as reduced antenna sensitivity and reduced data transmission and reception efficiency of the antenna, which limits RF functions.

### SUMMARY OF THE INVENTION

The present disclosure is contrived to solve the foregoing problems, and an aspect of the present disclosure is to provide a metal card in which an insert coil that communicates with a wireless IC chip in a wireless manner is built in an insert coil structure supporting the wireless IC chip, and a portion of the insert coil is configured to be connected to an antenna coil of an antenna layer in a wired manner, and a method of manufacturing the same, thereby improving the antenna sensitivity of the metal card and increasing the efficiency of data transmission and reception of the antenna.

In order to solve the foregoing problems, a metal card including an insert coil according to an embodiment of the present disclosure may include an antenna layer; a wireless IC chip with a built-in chip coil for wireless communication with the antenna layer; and an insert coil structure supporting the wireless IC chip, wherein the insert coil structure includes an insert coil inserted into an upper portion of a support body adjacent to the chip coil, and formed with a path to transmit a wireless signal of the chip coil in a wired manner to an antenna coil of the antenna layer.

In order to solve the foregoing problems, a method of manufacturing a metal card including an insert coil according to an embodiment of the present disclosure may include sequentially stacking a metal layer, an electromagnetic shielding layer, and an antenna layer to form a metal card body; milling an insert coil structure receiving portion such that an antenna coil of the antenna layer is exposed in a predetermined region of the metal card body; milling a through hole in a pre-prepared insert coil structure; inserting the processed insert coil structure into the insert coil structure receiving portion; and inserting a wireless IC chip into an upper portion of a support body of the insert coil structure.

According to an embodiment of the present disclosure, there may be provided a metal card including an insert coil, thereby improving the antenna sensitivity of the metal card, and increasing the data transmission and reception efficiency of the antenna.

Accordingly, according to an embodiment of the present disclosure, there may be provided a metal card in which a portion of an insert coil is connected to an antenna coil of an antenna layer in a wired manner through a through hole formed vertically with a depth from the insert coil built in an insert coil structure supporting a wireless IC chip to a lower portion of a support body of the insert coil structure and a contact pad attached to the through hole, and a method of manufacturing the same, thereby improving the antenna sensitivity of the metal card and increasing the efficiency of data transmission and reception of the antenna.

### BRIEF DESCRIPTION OF THE DRAWINGS

FIG. 1 is an exploded perspective view of a metal card including an insert coil according to an embodiment of the present disclosure.
FIG. 2 is a view for explaining a structure of an antenna layer according to an embodiment of the present disclosure.
FIG. 3 is a view for explaining upper and lower patterns of an insert coil according to an embodiment of the present disclosure.
FIG. 4 is a cross-sectional side view of a metal card including an insert coil according to an embodiment of the present disclosure.
FIG. 5 is a process diagram for explaining a method of manufacturing a metal card including an insert coil according to an embodiment of the present disclosure.

### DETAILED DESCRIPTION OF THE PREFERRED EMBODIMENT

The following description illustrates the principles of the present disclosure. It will thus be appreciated that those skilled in the art will be able to devise various devices that, although not explicitly described or shown in this specification, implement the principles of the present disclosure and are included in the concept and scope of the present disclosure. Furthermore, it should be understood that all conditional terms and embodiments recited in this specification are intended only for pedagogical purposes to aid the reader in understanding the concept of the present disclosure, and are not limited to such specifically recited embodiments and conditions.

For example, throughout the specification, in case where a portion is "connected" to the other portion, it may include a case of being "indirectly connected" to the other portion by interposing a member therebetween as well as a case of being "directly connected" to the other portion. Furthermore, when a portion may "include" a certain element, unless specified otherwise, it may not be construed to exclude another element but may be construed to further include other elements.

Moreover, it should be understood that all detailed description herein reciting the principles, aspects, and embodiments of the present disclosure as well as specific embodiments thereof are intended to encompass both structural and functional equivalents thereof. Additionally, it should be understood that such equivalents include both currently known equivalents as well as equivalents to be developed in the future, that is, any elements developed to perform the same function regardless of its structure.

The foregoing objects, features and advantages will be more obvious through the following detailed description associated with the accompanying drawings, and accordingly, the technological concept of the present disclosure can be easily implemented by a person having ordinary skill in the art to which the present disclosure pertains. In describing the present disclosure, moreover, the detailed description will be omitted when a specific description for publicly known technologies to which the present disclosure pertains is judged to obscure the gist of the present disclosure.

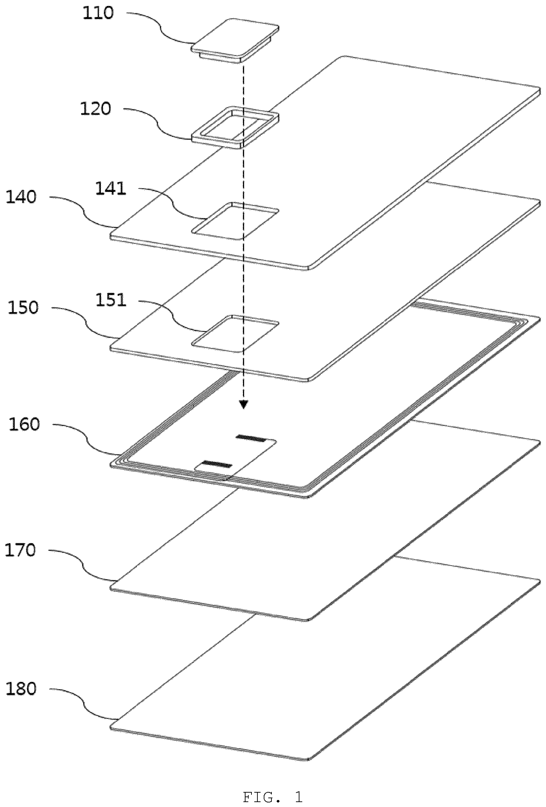

FIG. 1 is an exploded perspective view of a metal card including an insert coil according to an embodiment of the present disclosure.

Referring to FIG. 1, a metal card 100 according to an embodiment of the present disclosure may include an antenna layer 160, a wireless IC chip 110 with a built-in chip coil for wireless communication with the antenna layer 160, and an insert coil structure 120 supporting the wireless IC chip 110.

In addition, an insert coil may be inserted into an upper portion of a support body of the insert coil structure 120 adjacent to the chip coil, and the insert coil may be formed with a path to transmit a wireless signal of the chip coil in a wired manner to an antenna coil of the antenna layer 160.

Furthermore, in the metal card 100, the antenna layer 160, the electromagnetic wave shielding layer 150, and the metal layer 140 may be sequentially stacked to form a metal card body.

Here, in the metal card body, in order to receive the insert coil structure 120, a predetermined region of the metal card body may be opened with a depth up to a point where the antenna coil of the antenna layer 160 is exposed so as to form an insert coil structure receiving portion 141, 151.

Furthermore, an epoxy sheet 170 may be disposed on a lower surface of the antenna layer 160 and a printing sheet 180 may be disposed on a lower surface of the epoxy sheet 170.

Here, an epoxy material that is highly heat-resistant and less warped may be used for the epoxy sheet 170 to reduce deformation of the metal card 100 so as to improve the precision and uniformity of the product, and the printing sheet 180 may be formed by printing magnetic or user information.

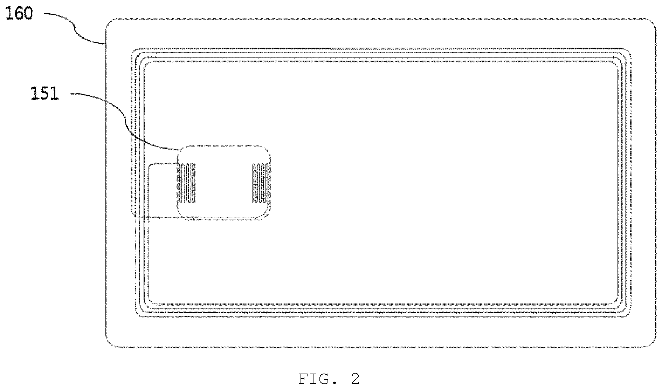

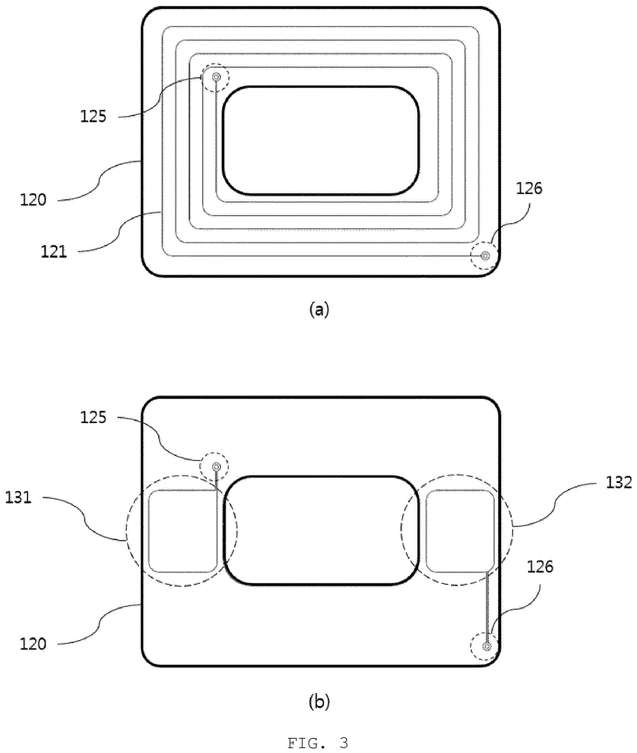

FIG. 2 is a view for explaining a structure of an antenna layer according to an embodiment of the present disclosure, and FIG. 3 is a view for explaining upper and lower patterns of an insert coil according to an embodiment of the present disclosure.

Referring to FIG. 2, the structure of the antenna layer 160 according to an embodiment of the present disclosure may be formed such that the antenna coil of the antenna layer 160 is wound along an outer region of the antenna layer 160.

Furthermore, in order to receive the insert coil structure 120, the insert coil structure receiving portion 151 may be formed by opening a predetermined region of the antenna layer 160 with a depth up to a point where the antenna coil is exposed.

Accordingly, the insert coil structure 120 is received in the insert coil structure receiving portion 151, and the insert coil structure 120 may support the wireless IC chip 110 for wireless communication with the antenna layer 160.

Here, a chip coil for wireless communication with the antenna layer 160 is built in the wireless IC chip 110, and an insert coil may be received in the upper portion of the support body of the insert coil structure 120 adjacent to the chip coil.

In addition, the insert coil may be a path formed to transmit a wireless signal of the chip coil in a wireless manner to the antenna coil of the antenna layer 160.

Accordingly, the wireless IC chip 110 supported by the insert coil structure 120 may communicate with the antenna layer 160 in a wireless manner.

Furthermore, (a) of FIG. 3 is a view showing an upper pattern of an insert coil 121 when an insert coil structure 120 according to an embodiment of the present disclosure is inserted into an insert coil structure receiving portion.

Referring to (a) of FIG. 3, the insert coil 121 according to an embodiment of the present disclosure may be formed with a path to transmit a wireless signal of the chip coil in a wired manner to the antenna coil of the antenna layer 160, and inserted into an upper portion of a support body of the insert coil structure 120 adjacent to the chip coil.

Here, a through hole may be formed vertically such that a portion of the insert coil 121 is electrically connected to the antenna coil of the antenna layer 160, and the through hole may include a first through hole 125 and a second through hole 126.

More specifically, the first through hole 125 may be formed vertically with a depth from one end of the insert coil 121 adjacent to the upper portion of the support body to a lower portion of the support body.

In addition, the second through hole 126 may be formed vertically with a depth from the other end of the insert coil 121 to the lower portion of the support body.

Here, the first through hole 125 and the second through hole 126 may be vertically formed with a conductive material such that a portion of the insert coil 121 is electrically connected to the antenna coil of the antenna layer 160. For example, the conductive material may be a metal itself, an electrically conductive plastic, a conductive adhesive, or other conductive polymer materials.

For example, the first through hole 125 and the second through hole 126 may be formed by plating inner sides of the first through hole 125 and the second through hole 126 with copper, iron, aluminum, gold or silver having good electrical conductivity, or by applying a resin solution of a conductive polymer material having an anisotropic conductive film or other conductive adhesive or metal powder and then hardening and solidifying over time.

Furthermore, (b) of FIG. 3 is a view showing a lower pattern of an insert coil 121 when the insert coil structure 120 according to an embodiment of the present disclosure is inserted into the insert coil structure receiving portion.

Referring to (b) of FIG. 3, the first through hole 125 and the second through hole 126 may be formed vertically from the insert coil 121 inserted into the upper portion of the support body of the insert coil structure 120 to the lower portion of the support body.

Here, a contact pad may be disposed on the lower portion of the support body such that a portion of the insert coil 121 is electrically connected to the antenna coil of the antenna layer 160 through the first through hole 125 and the second through hole 126.

More specifically, the contact pad may include a first contact pad 131 and a second contact pad 132, and the first contact pad 131 may be attached to the first through hole 125 such that one end of the insert coil 121 is electrically connected to the antenna coil.

In addition, the second contact pad 132 may be attached to the second through hole 126 such that the other end of the insert coil 121 is electrically connected to the antenna coil.

Furthermore, remaining spaces inside the first through hole 125 and the second through hole 126 may be filled with either a conductive material or a non-conductive material to prevent malfunctions in the metal card 100 from occurring when moisture or dust enters the space.

For example, remaining spaces inside the first through hole 125 and the second through hole 126 may be filled with a conductive material or an electrically conductive adhesive (ECA), and may also filled with, when electrical conduction is sufficient, a non-conductive plastic material such as a PVC material for weight reduction.

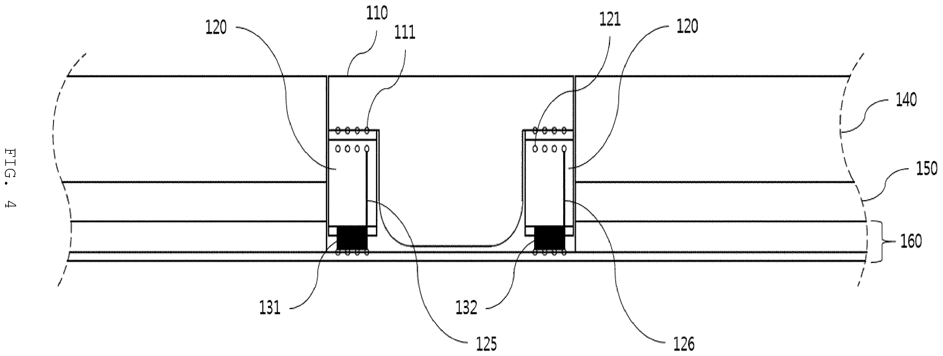

FIG. 4 is a cross-sectional side view of a metal card including an insert coil according to an embodiment of the present disclosure.

Referring to FIG. 4, for the metal card 100, a metal layer 140, an electromagnetic wave shielding layer 150, and an antenna layer 160 may be sequentially stacked to form a metal card body, and an insert coil structure 120 supporting a wireless IC chip 110 may be inserted into the metal card body.

Here, in the metal card body, in order to receive the insert coil structure 120, a predetermined region of the metal card body may be opened with a depth up to a point where the first antenna coil of the antenna layer 160 is exposed so as to form an insert coil structure receiving portion 141, 151.

Furthermore, the insert coil structure 120 supporting the wireless IC chip 110 may be inserted into the insert coil structure receiving portion 141, 151, and the chip coil 111 may be built in the wireless IC chip 110 for wireless communication with the antenna layer 160.

Here, an upper adhesive sheet, which is a thermoplastic resin, may be applied between an upper portion of the support body of the insert coil structure 120 adjacent to the chip coil 111 and the chip coil 111.

Furthermore, an insert coil 121 formed with a path to transmit a wireless signal of the chip coil 111 in a wired manner to the antenna coil of the antenna layer 160 may be inserted into the upper portion of the support body.

In addition, a first through hole 125 and a second through hole 126 may be vertically formed with a conductive material such that a portion of the insert coil 121 is electrically connected to the antenna coil of the antenna layer 160.

Furthermore, the first through hole 125 and the second through hole 126 may be formed vertically with a depth from the insert coil 121 inserted into the upper portion of the support body of the insert coil structure 120 to a lower portion of the support body.

Here, a contact pad may attached to the lower portion of the support body so as to be connected to the first through hole 125 and the second through hole 126 in a wired manner, such that a portion of the insert coil 121 can be electrically connected to the antenna coil of the antenna layer 160.

More specifically, the contact pad may include a first contact pad 131 and a second contact pad 132, and the first contact pad 131 may be vertically connected to the first through hole 125 such that one end of the insert coil 121 is electrically connected to the antenna coil.

In addition, the second contact pad 132 may be vertically connected to the second through hole 126 such that the other end of the insert coil 121 is electrically connected to the antenna coil.

Here, the contact pad including the first contact pad 131 and the second contact pad 132 may have a lower adhesive sheet, which is a thermoplastic resin, applied to a bonding region with respect to the insert coil structure 120.

Furthermore, as an embodiment of the present disclosure, the upper adhesive sheet and the lower adhesive sheet may be hot melt sheets.

Here, the hot melt sheet is melted by heating, and a material such as a thermoplastic resin has the characteristics of solidifying when heated, melted, and then cooled, so the material may be used as a film-type hot melt adhesive.

As one embodiment, the upper adhesive sheet and the lower adhesive sheet may be adhesive sheets that take into account an adhesive strength of a bonding region between the chip coil 111 built in the wireless IC chip 110 and the insert coil structure 120 and a bonding region between the insert coil structure 120 and the contact pad 131, 132.

In addition, the upper adhesive sheet and the lower adhesive sheet may be implemented as hot melt sheets using a material suitable for metal materials, unlike adhesives used for plastic sheets.

Furthermore, since a portion of the insert coil 121 is vertically connected to the contact pad 131, 132 through the through hole 125, 126 for wireless communication between the wireless IC chip 110 and the antenna coil of the antenna layer 160, an efficient wireless communication sensitivity of the metal card 100 may be formed.

As shown in FIG. 4, the insert coil 121 may be fixed so as to be in close contact with the wireless IC chip 110 at a very close distance, and accordingly, the communication sensitivity between the insert coil 121 and the wireless IC chip 110 may be greatly improved.

That is, in the case of conventional technologies, a wireless booster coil or the like is provided only at a lower layer of a molding location where the wireless IC chip is received, and thus the communication performance and sensitivity are formed low, whereas the insert coil 121 according to an embodiment of the present disclosure is fixed in close contact with the wireless IC chip 110 at a very close distance, and thus the communication performance and sensitivity are formed high.

Moreover, since a transmission and reception signal of the insert coil 121 according to an embodiment of the present disclosure is directly connected to the antenna layer 160 located therebelow through a wired connection, direct communication between the wireless IC chip 110 and the antenna layer 160 is enabled without a separate wireless signal induction process between the wireless booster coil and the antenna layer. Accordingly, additional interference or interference with wireless signals may be eliminated to maintain efficient communication performance of the antenna layer 160 and the wireless IC chip 110.

In addition, since the insert coil structure 120 is formed in a form that supports the wireless IC chip 110, it has an advantage of facilitating the mounting of the wireless IC chip 110 while enhancing communication performance.

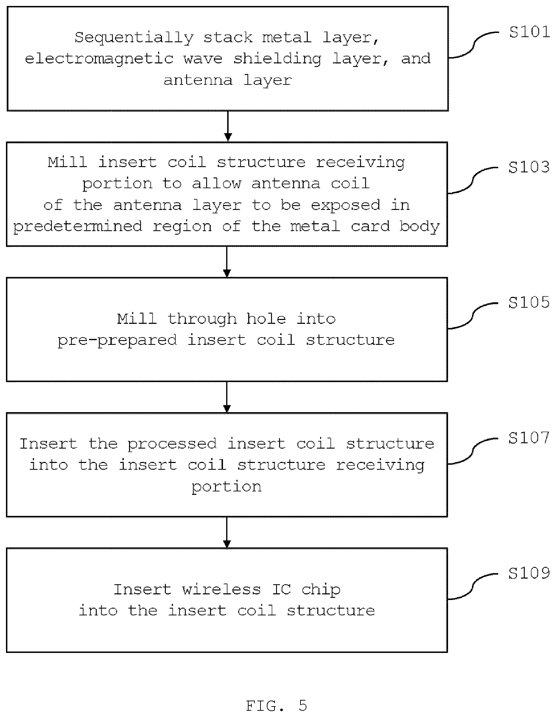

FIG. 5 is a process diagram for explaining a method of manufacturing a metal card including an insert coil according to an embodiment of the present disclosure.

First, a metal layer 140, an electromagnetic wave shielding layer 150, and an antenna layer 160 are sequentially stacked to form a metal card body (S101).

Then, an insert coil structure receiving portion is milled such that an antenna coil of the antenna layer is exposed in a predetermined region of the metal card body (S103).

Then, a through hole is milled into a pre-prepared insert coil structure (S105).

Here, a first through hole 125 formed vertically with a depth from one end of the insert coil 121 adjacent to an upper portion of a support body of the insert coil structure 120 into which the wireless IC chip 110 is inserted to a lower portion of the support body may be milled and processed.

In addition, a second through hole 126 formed vertically with a depth from the other end of the insert coil 122 to the lower portion of the support body may be milled and processed.

Then, the processed insert coil structure is inserted into the insert coil structure receiving portion (S107).

Here, the respective through holes 125, 126 formed with a depth to the lower portion of the support body and the contact pads 131, 132 may be connected in a wired manner, and electrically connected to an antenna coil of the antenna layer 160.

More specifically, the insert coil 121 may be electrically connected to the antenna coil of the antenna layer 160 in a wired manner through the first contact pad 131 attached to the first through hole 125.

Furthermore, the insert coil 121 may be electrically connected to the antenna coil of the antenna layer 160 in a wired manner through the second contact pad 132 attached to the second through hole 126.

In addition, a thermoplastic resin may be applied to a bonding region between the contact pad 131, 132 and the insert coil structure 120 to form a lower adhesive sheet.

Furthermore, the insert coil 121 formed with a path to transmit a wireless signal of the chip coil 111 in a wired manner to the antenna coil of the antenna layer 160 may be inserted into the upper portion of the support body of the insert coil structure 120.

Then, a wireless IC chip is inserted into the upper portion of the support body of the insert coil structure to perform a first press process (S109).

Here, a thermoplastic resin may be applied between the upper portion of the support body of the insert coil structure 120 adjacent to the chip coil 111 and the chip coil 111 to form an upper adhesive sheet.

While the preferred embodiments of the present disclosure have been shown and described above, it will be of course understood by those skilled in the art that various modifications may be made without departing from the gist of the disclosure as defined in the following claims, and it is to be noted that those modifications should not be understood individually from the technical concept and prospect of the present disclosure.

## Claims

1. A wireless metal card, the card comprising:
an antenna layer;
a wireless IC chip with a built-in chip coil for wireless communication with the antenna layer; and
an insert coil structure supporting the wireless IC chip,
wherein the insert coil structure comprises:
an insert coil inserted into an upper portion of a support body adjacent to the chip coil, and formed with a path to transmit a wireless signal of the chip coil in a wired manner to an antenna coil of the antenna layer.

2. The card of claim 1, further comprising:
a through hole in which a conductive material is formed vertically such that a portion of the insert coil is electrically connected to the antenna coil of the antenna layer.

3. The card of claim 2, wherein the through hole comprises:
a first through hole formed vertically with a depth from one end of the insert coil adjacent to the upper portion of the support body into which the wireless IC chip is inserted to a lower portion of the support body; and
a second through hole formed vertically with a depth from the other end of the insert coil to the lower portion of the support body.

4. The card of claim 1, wherein the insert coil structure further comprises:
a contact pad connected in a wired manner to the through hole at the lower portion of the support body and electrically connected to the antenna coil of the antenna layer.

5. The card of claim 4, wherein the contact pad comprises:
a first contact pad attached to the first through hole such that the insert coil is electrically connected to the antenna coil; and
a second contact pad attached to the second through hole such that the insert coil is electrically connected to the antenna coil.

6. The card of claim 4, further comprising:
a lower adhesive sheet formed by applying a thermoplastic resin to a bonding region between the contact pad and the insert coil structure.

7. The card of claim 1, further comprising:
an upper adhesive sheet formed by applying a thermoplastic resin between the upper portion of the support body adjacent to the chip coil and the chip coil.

8. The card of claim 1, wherein the metal card comprises:
a metal card body in which a metal layer, an electromagnetic wave shielding layer and the antenna layer are sequentially stacked,
wherein the metal card body comprises:
an insert coil structure receiving portion formed by opening a predetermined region of the metal card body with a depth up to a point where the antenna coil of the antenna layer is exposed, in order to receive the insert coil structure.

9. A method of manufacturing a metal card, the method comprising:
sequentially stacking a metal layer, an electromagnetic shielding layer, and an antenna layer to form a metal card body;
milling an insert coil structure receiving portion such that an antenna coil of the antenna layer is exposed in a predetermined region of the metal card body;
milling a through hole in a pre-prepared insert coil structure;
inserting the processed insert coil structure into the insert coil structure receiving portion; and
inserting a wireless IC chip into an upper portion of a support body of the insert coil structure.

10. The method of claim 9, wherein the milling of the through hole comprises:
milling a first through hole formed vertically with a depth from one end of an insert coil adjacent to the upper portion of the support body of the insert coil structure into which the wireless IC chip is inserted to a lower portion of the support body; and
milling a second through hole formed vertically with a depth from the other end of the insert coil to the lower portion of the support body.

11. The method of claim 9, wherein the inserting of the insert coil structure further comprises:
connecting the respective through holes formed with a depth to the lower portion of the support body and contact pads in a wired manner to electrically connect to the antenna coil of the antenna layer; and
applying a thermoplastic resin to a bonding region between the contact pad and the insert coil structure to form a lower adhesive sheet.

12. The method of claim 11, wherein the connecting of the insert coil structure to the antenna coil comprises:
electrically connecting the insert coil to the antenna coil of the antenna layer in a wired manner through a first contact pad attached to the first through hole; and
electrically connecting the insert coil to the antenna coil of the antenna layer in a wired manner through a second contact pad attached to the second through hole.

13. The method of claim 9, wherein the inserting of the insert coil structure comprises inserting an insert coil formed with a path to transmit a wireless signal of a chip coil in a wired manner to the antenna coil of the antenna layer into the upper portion of the support body of the insert coil structure adjacent to the chip coil built in the wireless IC chip.

14. The method of claim 9, wherein the inserting of the wireless IC chip further comprises:
applying a thermoplastic resin between the upper portion of the support body of the insert coil structure adjacent to the chip coil and the chip coil to form an upper adhesive sheet.
